# FASCICULE DE BREVET EUROPEEN

(11) **EP 2 479 101 B1**
(45) Date de publication et mention de la délivrance du brevet: **30.12.2015**
(21) Numéro de dépôt: 12305006.4
(22) Date de dépôt: 03.01.2012
(51) Int. Cl.: B63B 9/06, B63B 35/44, F03D 11/04

(54) **Support flottant pour structure offshore de type éolienne**
Schwimmende Konstruktion für Offshore-Struktur vom Typ Windkraftanlage
Floating support for an offshore structure such as a wind turbine

(30) Priorité: 25.01.2011 FR 1150580
(43) Date de publication de la demande: 25.07.2012
(73) Titulaire: DCNS, 75015 Paris (FR)
(72) Inventeur: Thieffry, Philippe, 56260 Larmor Plage (FR); Moiret, Cyrille, Jacques, 56600 Lanester (FR); Saint-Orens, Thierry, 29260 Le Folgoet (FR)
(74) Mandataire: Domenego, Bertrand

(56) Documents cités:
- WO-A1-01/15970
- WO-A2-2009/087200
- GB-A- 2 166 090
- GB-A- 2 430 965
- US-A- 5 088 858

## Description

La présente invention concerne un support flottant pour une structure offshore telle que notamment une éolienne.

Plus particulièrement, l'invention se rapporte à un tel support pour une telle structure qui comporte des moyens en forme de mât de support, dont la partie supérieure est associée à la structure offshore et dont la partie inférieure est associée à des moyens en forme de flotteurs et éventuellement à des moyens formant lest.

Différents modes de réalisation de ce type de support ont déjà été décrits dans l'état de la technique, par exemple dans WO 01/15970 A1 et GB 2 166 090 A..

D'une façon générale, ces structures sont réalisées à partir de tubes en matériau métallique soudés les uns aux autres, ces tubes formant également des flotteurs.

On sait en effet que les exigences en matière de fonctionnement des éoliennes offshore imposent des performances élevées de stabilité des unités flottantes qui les accueillent.

Ces caractéristiques de stabilité sont atteintes, soit par la forme des flotteurs (stabilité de forme accrue pour de forts diamètres de flotteurs), soit par la masse de l'unité (stabilité de poids favorisée par du lest positionné dans les fonds de l'unité).

Des solutions ont déjà été proposées en privilégiant l'une ou l'autre de ces orientations techniques.

On conçoit cependant qu'aucune de celles-ci ne donne pleinement satisfaction.

Le but de l'invention est donc de résoudre ces problèmes.

A cet effet l'invention a pour objet un support flottant pour structure offshore selon la revendication 1.

Selon d'autres aspects de l'invention, ce support flottant pour structure offshore comprend l'une ou plusieurs des caractéristiques optionnelles des revendications 2 à 6.

L'invention sera mieux comprise à l'aide de la description qui va suivre, donnée uniquement à titre d'exemple et faite en se référant aux dessins annexés, sur lesquels :

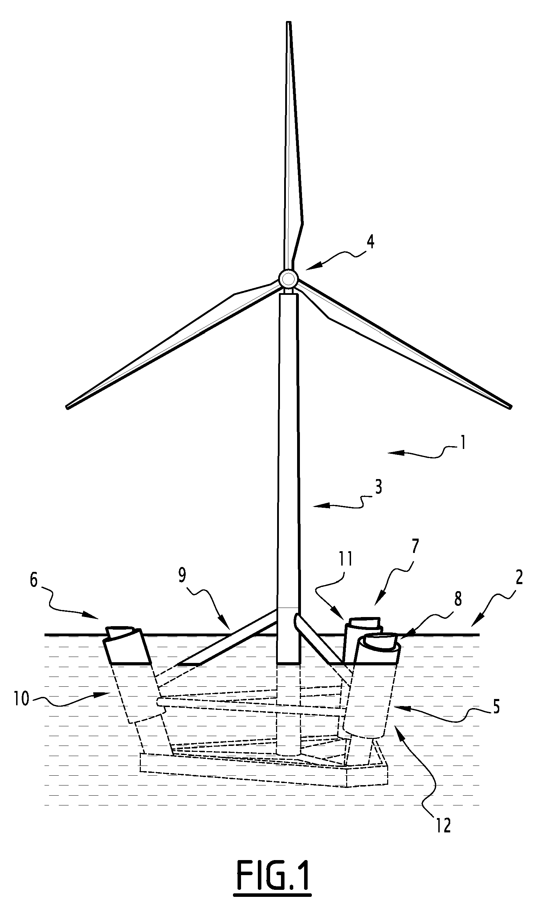

- la figure 1 représente une vue en perspective et schématique d'une structure offshore telle qu'une éolienne comportant un support flottant selon l'invention, et
- la figure 2 représente une vue en perspective et schématique d'un exemple de réalisation d'un manchon entrant dans la constitution d'une telle éolienne.

On a en effet illustré sur ces figures, un support flottant pour une structure offshore telle que notamment une éolienne.

Cette structure est désignée par la référence générale 1 sur ces figures et le support flottant est désigné par la référence générale 2.

Ce support comporte de façon classique des moyens en forme de mât de support désignés par la référence générale 3, dont la partie supérieure est associée à la structure telle que par exemple une nacelle d'éolienne désignée par la référence générale 4, et dont la partie inférieure est associée à des moyens en forme de flotteurs désignés par la référence générale 5 et à des moyens formant lest non représentés sur ces figures.

Dans l'exemple décrit, les moyens en forme de flotteurs sont réalisés à partir de tubes métalliques soudés les uns aux autres et comportent par exemple trois portions de tubes formant flotteurs désignées par les références 6, 7 et 8, par exemple de forme cylindrique et allongée.

Ces tubes allongés sont alors disposés régulièrement autour des moyens en forme de mât et sont reliés entre eux et au mât par l'intermédiaire de poutres de liaison dont l'une est par exemple désignée par la référence générale 9.

Dans l'exemple décrit, trois flotteurs allongés sont disposés autour des moyens en forme de mât et sont inclinés par rapport à ceux-ci d'un angle compris entre 15° et 45° et de préférence de 30°, pour présenter une forme générale évasée à partir de la partie inférieure des moyens en forme de mât.

De plus et pour résoudre les problèmes décrits précédemment, ces portions de tubes sont équipées de manchons de flottaison en matière plastique, emmanchés autour de celles-ci, et désignés par les références générales 10, 11 et 12 respectivement pour les portions de tubes 6, 7 et 8.

En fait ces manchons de flottaison en matière plastique comportent par exemple une enveloppe externe dans laquelle peut être placée une matière plastique telle que par exemple du polyuréthane en mousse ou autre.

Ceci permet alors de réduire le diamètre des tubes utilisés pour réaliser les flotteurs, ce qui permet d'en réduire le poids et la quantité de matière utilisée tout en garantissant la stabilité de la structure.

Le nombre et les dimensions élémentaires de ces manchons de flottaison peuvent varier suivant la taille des volumes utiles de flottabilité additionnelle requis pour assurer la stabilité de forme de cette structure flottante.

Bien entendu différents modes de réalisation de ces manchons peuvent être envisagés.

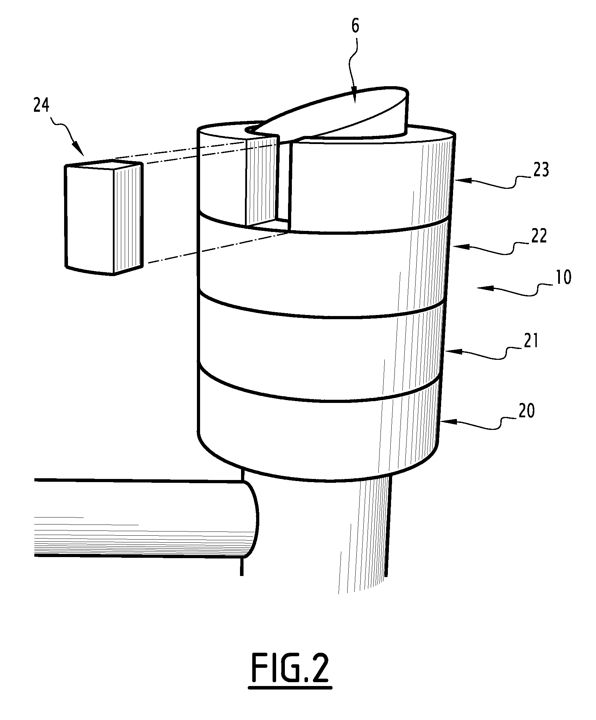

Ainsi on a illustré sur la figure 2, un exemple de réalisation possible dans lequel les manchons sont formés par un empilage d'anneaux placés autour d'un tube correspondant.

Dans cet exemple, le manchon 10 disposé autour du tube 6 est ainsi formé de quatre anneaux 20, 21, 22 et 23 empilés les uns sur les autres et emmanchés autour du tube.

Bien entendu un nombre différent d'anneaux peut être envisagé.

Chaque anneau peut également être formé par assemblage de secteurs élémentaires d'anneaux, comme cela est illustré sur cette figure 2 et dont l'un est désigné par la référence générale 24 sur cette figure.

Des moyens d'assemblage de ces secteurs les uns aux autres, des anneaux entre eux et/ou de ces différents organes entre eux et/ou au tube peuvent également être prévus.

Ces moyens sont par exemple constitués par des formes complémentaires des surfaces en contact de ces pièces ou encore par des mécanismes à vis, goujons, écrous ou autres.

Des simulations ont montré que des gains d'environ 20 % de la masse totale d'acier entrant dans la constitution du support pouvaient être envisagés.

Il va de soi bien entendu que d'autres modes de réalisation encore peuvent être envisagés.

## Revendications

1. Support flottant pour structure offshore telle que notamment une éolienne, du type comportant des moyens en forme de mât (3) de support dont la partie inférieure est associée à des moyens en forme de flotteurs (2) réalisés à base de tubes, les moyens en forme de flotteurs comportant des manchons de flottaison (10, 11, 12) emmanchés sur au moins certains des tubes (6, 7, 8) des moyens en forme de flotteurs, **caractérisé en ce que** les manchons de flottaison (10, 11, 12) sont en matière plastique et **en ce que** les tubes des moyens en forme de flotteurs sont de matériau métallique et sont disposés régulièrement autour des moyens en forme de mât et sont reliés entre eux et au mât par l'intermédiaire de poutres de liaison.

2. Support flottant pour structure offshore selon la revendication 1, **caractérisé en ce que** les manchons de flottaison (10, 11, 12) sont formés d'anneaux (20, 21, 22, 23) disposés les uns sur les autres.

3. Support flottant pour structure offshore selon la revendication 2, **caractérisé en ce que** les anneaux (20, 21, 22, 23) sont formés de secteurs élémentaires d'anneaux (24).

4. Support flottant pour structure offshore selon la revendication 3, **caractérisé en ce que** les secteurs élémentaires (24) et/ou les anneaux (20, 21, 22, 23) et/ou les manchons (10, 11, 12) comportent des moyens d'assemblage entre eux et/ou aux tubes.

5. Support flottant pour structure offshore selon l'une quelconque des revendications précédentes, **caractérisé en ce que** les manchons de flottaison (10, 11, 12) sont disposés dans une enveloppe externe.

6. Support flottant pour structure offshore selon l'une quelconque des revendications précédentes, **caractérisé en ce que** la matière plastique est du polyuréthane.

## Patentansprüche

1. Schwimmende Stütze für Offshore-Struktur, wie insbesondere ein Windrad, des Typs aufweisend Mittel der Form eines Halte-Masts (3), dessen unterer Abschnitt mit Mitteln der Form von Schwimmkörpern (2) verbunden ist, die auf Basis von Rohren realisiert sind, wobei die Mittel der Form von Schwimmkörpern Wasserlinien-Muffen (10, 11, 12) aufweisen, die auf wenigstens einige der Rohre (6, 7, 8) der Mittel der Form von Schwimmkörpern aufgesetzt sind, **dadurch gekennzeichnet, dass** die Wasserlinien-Muffen (10, 11, 12) aus Kunststoffmaterial sind und dass die Rohre der Mittel der Form von Schwimmkörpern aus Metallmaterial sind und regelmäßig um die Mittel der Form eines Masts angeordnet sind und miteinander und mit dem Mast verbunden sind durch die Zwischenordnung von Verbindungsbalken.

2. Schwimmende Stütze für Offshore-Struktur gemäß Anspruch 1, **dadurch gekennzeichnet, dass** die Wasserlinien-Muffen (10, 11, 12) von Ringen (20, 21, 22, 23) gebildet sind, die einer über dem anderen angeordnet sind.

3. Schwimmende Stütze für Offshore-Struktur gemäß Anspruch 2, **dadurch gekennzeichnet, dass** die Ringe (20, 21, 22, 23) von Ring-Elementsektoren gebildet sind.

4. Schwimmende Stütze für Offshore-Struktur gemäß Anspruch 3, **dadurch gekennzeichnet, dass** die Elementsektoren (24) und/oder die Ringe (20, 21, 22, 23) und/oder die Muffen (10, 11, 12) Mittel zur Montage aneinander und/oder an die Rohre aufweisen.

5. Schwimmende Stütze für Offshore-Struktur gemäß irgendeinem der vorhergehenden Ansprüche, **dadurch gekennzeichnet, dass** die Wasserlinien-Muffen (10, 11, 12) in einer äußeren Hülle angeordnet sind.

6. Schwimmende Stütze für Offshore-Struktur gemäß irgendeinem der vorhergehenden Ansprüche, **dadurch gekennzeichnet, dass** das Kunststoffmaterial Polyurethan ist.

## Claims

1. Floating support for an offshore structure such as especially a wind turbine, of a type comprising support means in the form of a mast (3), the lower part of which is associated with means in the form of floats (2) produced on the basis of tubes, the means in the form of floats including flotation sleeves (10, 11, 12) which are mounted around at least some of the tubes (6, 7, 8) of the means in the form of floats, **characterised in that** the flotation sleeves (10, 11, 12) are of plastic material; and **in that** the tubes of the means in the form of floats are of metal material and are arranged regularly around the means in the form of a mast and are connected one to another and to the mast by way of connecting gilders.

2. Floating support for an offshore structure according to claim 1, **characterised in that** the flotation sleeves (10, 11, 12) are formed by rings (20, 21, 22, 23) arranged one on top of another.

3. Floating support for an offshore structure according to claim 2, **characterised in that** the rings (20, 21, 22, 23) are formed by elementary sectors of rings (24).

4. Floating support for an offshore structure according to claim 3, **characterised in that** the elementary sectors (24) and/or the rings (20, 21, 22, 23) and/or the sleeves (10, 11, 12) comprise means for fitting to one another and/or to the tubes.

5. Floating support for an offshore structure according to any one of the preceding claims, **characterised in that** the flotation sleeves (10, 11, 12) are arranged within an outer shell.

6. Floating support for an offshore structure according to any one of the preceding claims, **characterised in that** the plastic material is polyurethane.
